# EUROPEAN PATENT SPECIFICATION

(11) **EP 1 181 695 B1**
(45) Date of publication and mention of the grant of the patent: **16.05.2007**
(21) Application number: 00927470.5
(22) Date of filing: 28.04.2000
(51) Int. Cl.: G21C 19/07

(54) **A CONTAINER FOR NUCLEAR FUEL ELEMENTS**
BEHÄLTER FÜR KERNBRENNELEMENTE
CONTENEUR POUR ELEMENTS DE COMBUSTIBLE NUCLEAIRE

(30) Priority: 25.05.1999 GB 9912089
(43) Date of publication of application: 27.02.2002
(73) Proprietor: British Nuclear Fuels PLC, Warrington, Cheshire WA3 6AS (GB)
(72) Inventor: MINSHALL, David, Warrington Cheshire WA3 6AS (GB); GARFIELD-FORD, Robert, Warrington Cheshire WA3 6AS (GB)
(74) Representative: Jones, Keith William
(86) International application number: PCT/GB2000/001648
(87) International publication number: WO 2000/072326

(56) References cited:
- EP-A- 0 080 894
- EP-A- 0 158 849
- EP-A- 0 858 079
- EP-A- 0 883 135
- EP-A- 0 947 434
- US-A- 4 331 244
- US-A- 4 815 624

## Description

The present invention relates to containers and, in particular, to containers for the storage and/or transport of nuclear fuel elements.

Typically, nuclear fuel elements may be stored and/or transported in containers in the form of casks, racks for in-pond storage of spent nuclear fuel elements, flasks and multi-clement bottles. These containers generally comprise an elongate body incorporating a plurality of compartments of rectangular cross section, each of which can accommodate a fuel element. The compartments are formed from elongate plates, which intersect one another at right angles to define a cellular grid structure.

A problem encountered in the construction of such containers concerns the joining together of the plates. One method of joining the plates is to weld the plates together. However, this method has certain disadvantages. For example, the plates are usually made from materials such as stainless steel or boron steel which are extremely difficult to weld. Furthermore, the welding material used to form fillet welds occupies space within the compartments so that the passage of a fuel element along a compartment may be obstructed. A further disadvantage is that plates joined together by welds are prone to distortion due to the intense heat generated during the welding process.

It is an object of this invention to provide a container for nuclear fuel elements in which the plates forming the compartments arc joined together in such a manner as to overcome the aforementioned disadvantages.

According to the present invention there is provided a container for the storage or transport of nuclear fuel elements comprising a plurality of elongate compartments for receiving the nuclear fuel elements, the compartments being defined by a first set of plates intersecting with a second set of plates, the first set of plates extending perpendicularly with respect to the second set of plates to define compartments having a rectangular cross section, wherein, at an intersection of a first plate in the first set of plates and a second plate in the second set of plates, the first and second plates are interconnected by joint which comprises a locking pin extending through a passage formed through and parallel to adjacent longitudinal edges of the plates.

Preferably, the joint comprises at least one projection and a recess provided in a longitudinal edge of the second plate, the recess on the first plate receiving a projection on the second plate and the recess on the second plate receiving a projection on the first plate, and wherein the locking pin extends through a passage provided in the projections of the first and second plates.

In a preferred embodiment the passage for the locking pin in the projections of the first and second plates each comprises a groove.

The projections may each comprise an end face extending along the longitudinal edge of the plate and a side face extending perpendicular thereto, wherein the groove extends parallel with the end face and has an access opening extending along the length of the groove and provided in the side face.

Preferably, the access opening to the groove in the side face of the projections of the first plate is perpendicular with respect to the access opening to the groove in the side face of the projections in the second plate.

According to a further aspect of the invention, at a position along an intersection of the first and second plates, two plates in the first set are each formed along their mutually adjacent longitudinal edges so as to define a tongue on each of the two plates, the tongues co-operating so as to present mutually adjacent surfaces, a groove being provided in each of the adjacent surfaces to define the passage for the locking pin, and wherein the tongues are accommodated in an aperture formed in the plates of the second set.

Preferably, at a further position along the intersection of the first and second set are each formed along their mutually adjacent longitudinal edges so as to define a tongue on each of the two plates, the tongues co-operating so as to present mutually adjacent surfaces, a groove being provided on each of the adjacent surfaces to define a passage for the locking pin, and wherein the tongues are accommodated in an aperture formed in the two plates of the first set.

The profiles of the joints at the intersections of the plates can be formed by any suitable metal cutting operation. However, it has been found that the most suitable method is a laser cutting technique. This technique enables the joints to be produced with the required dimensional accuracy.

It has been found that the interconnecting joints according to the invention provide the ability to withstand static and dynamic loads. The resilience of the joints enables the container to absorb energy resulting from impacts.

Construction of the container in accordance with the present invention enables the components to be transported conveniently as so-called 'flat packs'. Container assembly can be carried on site by unskilled labour.

The absence of weld material within the compartments ensures that there is an increased amount of space for accommodating the fuel elements. Furthermore, there are no obstructions within the compartments to hinder insertion of the fuel elements. Since no heat is required for assembly the plates, in contrast to a welded assembly, the plates are not prone to distortion.

The plates defining the compartments may have a thickness in the order of 5mm. If the containers are required to accommodate spent nuclear fuel elements, the material for the plates should be a suitable neutron poison. Typically, the material may be a stainless steel or a boron steel.

The invention will now be described, by way of example, with reference to the accompanying drawings, in which:
Figure 1 is a diagrammatic end elevation of a container having compartments for accommodating nuclear fuel elements according to a preferred aspect of the invention;
Figure 2 is an isometric view of the compartments shown in Figure 1;
Figure 3 is a side elevation in the direction of arrow A (Figure 2) of the compartments shown in Figure 1;
Figure 4 is a cross section of a joint at a corner of a compartment taken on line IV-IV shown in Figure 3;
Figure 5 is a cross section of a joint at a T-junction taken on line V-V shown in Figure 3, and
Figures 6 and 7 are cross sections of a joint at a cross junction.

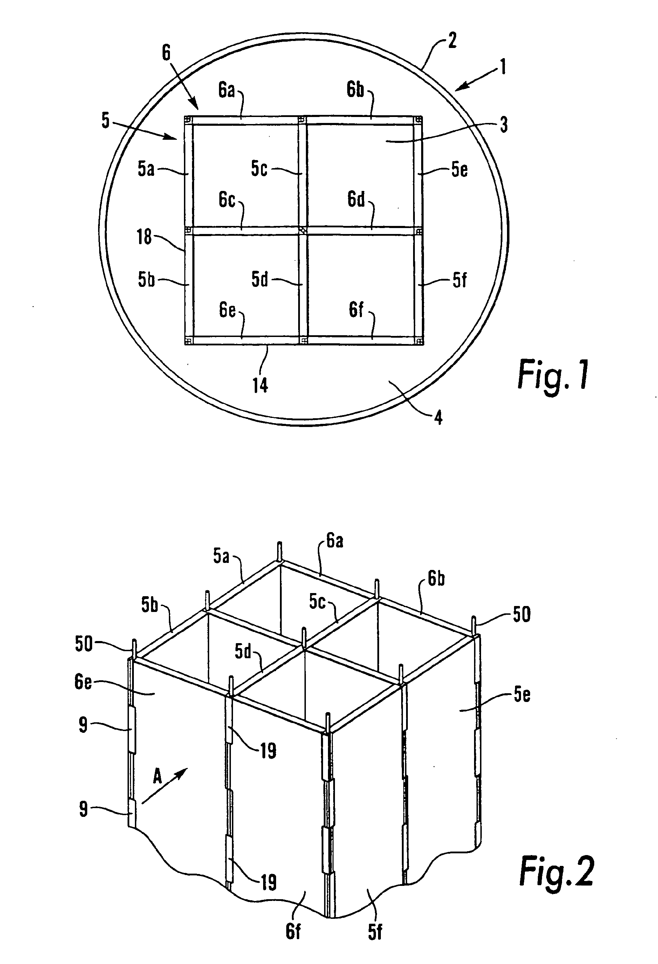

Referring to Figure 1, there is shown a diagrammatic representation of a typical container 1 for receiving nuclear fuel elements (not shown). The container 1 comprises an elongate cylindrical casing 2 within which is housed an assembly of compartments 3. The compartments arc located within the casing 2 by a plurality of baffle plates 4 positioned at intervals along the container 1.

The compartments 3 are of rectangular cross section and are formed by sets of elongate plates 5, 6. A first set of plates 5 extends perpendicularly with respect to a second set of plates 6 so as to form opposing walls of the compartments 3. Although four compartments have been shown in Figure 1, it will be apparent that any suitable number of compartments can be chosen to suit a particular application. Each compartment 3 is of a size that is sufficient to accommodate a nuclear fuel element.

As shown in Figures 1 and 2, the first set of plates 5 comprises three pairs of plates, 5a, 5b, 5c, 5d, 5e, 5f. The second set of plates 6 similarly comprises three pairs of plates 6a, 6b, 6c, 6d, 6e, 6f. At each junction the first and second set of plates 5, 6, the plates are interlocked by a pinned joint, as hereinafter described.

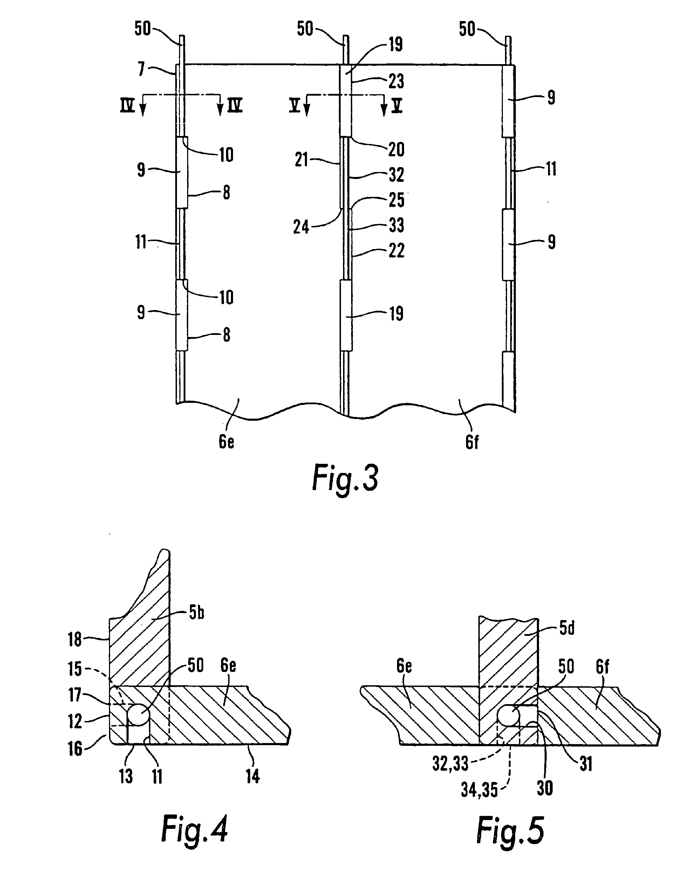

A typical interlocking corner joint at a junction of the plate 5b with the plate 6e is shown in Figure 4. As seen in Figure 3, along the longitudinal edge of the plate 6e there is a series of alternating projections 7 and recesses 8. Similarly, formed along the longitudinal edge the plate 5b is a series of alternating projections 9 and recesses 10.

Formed along each of the projections 7 of the plate 6e, is a groove 11. The direction of the groove 11 extends parallel to a longitudinal edge 12 of the projection 7 and has an access opening 13 in a side face 14 of the plate 6e. Similarly, formed along each of the projections 9 of the plate 5b is a groove 15. The groove 15 extends in a direction parallel to a longitudinal edge 16 and has an access opening 17 in a side face 18 of the plate 5b.

When the plates 5b and 6e are assembled, the projections and recesses 9, 10 of plate 5b interengage with the projections and recesses 7, 8 of the plate 6e so as to align the grooves 11 and 15. A locking pin 50 is inserted through the passage formed by the grooves 11, 15 so as to interlock the plates 5b, 6e. Since the access openings 13, 17 of the respective grooves 11, 15 are arranged perpendicularly with respect to one another, the plates 5b, 6e cannot be disassembled without first removing the locking pin 50.

At a typical T-junction, as seen in Figure 5. The three plates 5d, 6c and 6f are interlocked by a locking pin 50. Along a longitudinal edge of the plate 5d is a series of projections 19. Between each projection 19, there is a recess 20 which has a length along the edge to receive a projection 21, formed on the longitudinal edge of plate 6f, and a projection 22, formed on the longitudinal edge of plate 6e. A recess 23 formed on the longitudinal edge of plate 6f receives the projection 19 on plate 5d. Further recesses 24 on plate 6f are of sufficient length to receive both of the projections 19, 22 on plates 5d, 6e respectively. Recesses 25 formed on the longitudinal edge of plate 6e receives the projections 19, 21 on plates 5d, 6f, respectively.

A groove 30 is formed along the projection 19 and has an access opening 31 in a side face of the plate 5d. Grooves 32, 33 are formed respectively in the projection 21 of plate 6f and in the projection 22 of plate 6e. Each of the grooves 32, 33 has an access opening 34, 35 on a side face of the respective plate 6f, 6e. The access openings 34, 35 are arranged in alignment with each other, but arc disposed perpendicularly with respect to the access openings 31 of the grooves 30. Thus, when the locking pin 50 extends through the aligned grooves 30, 32, 33, the plates 5d, 6f, 6e are completely interlocked.

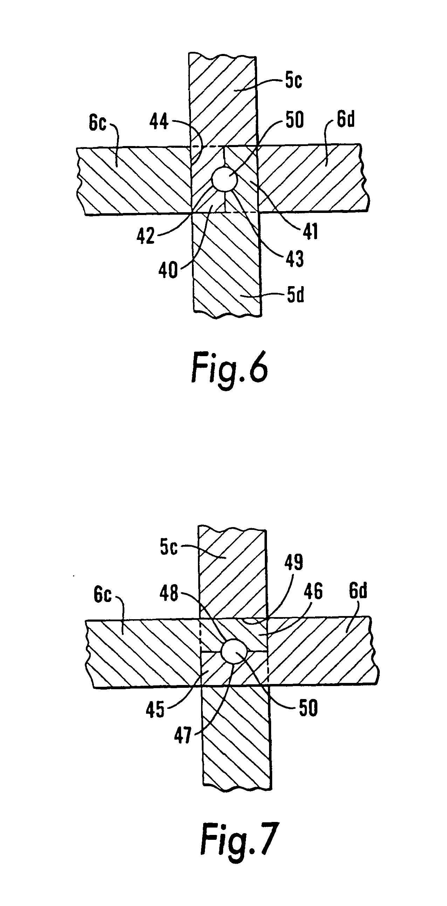

A cross joint formed between plates 5c, 5d, 6c, 6d as shown in Figures 6 and 7. Figure 6 is a cross section through the cross joint at a position near the end of the compartments 3 (corresponding to the position of lines V-V shown in Figure 3). The longitudinal edge of plate 5c is rebated by removing half the thickness of the plate to form a tongue 40. Similarly, the longitudinal edge of plate 5d is rebated to form a tongue 41. Semi-circular grooves 42, 43 are formed in the mutually adjacent surfaces of tongues 40, 41 respectively. The grooves 42, 43 co-operate to form a circular passage through which a locking pin 50 can be inserted. The lengths of the tongues 40, 41 along the longitudinal edges of the plates correspond to the length of a projection 19 along the plate 5d. The tongues 40, 41 extend from the longitudinal edge of the plates by an amount equal to the thickness of the plates.

To accommodate the tongues 40, 41, rectangular-shaped apertures 44 are formed in the abutting plates 6c, 6d.

A further cross section of the cross joint is shown in Figure 7 (the cross section is taken at a position corresponding to the position of projections 21 shown in Figure 3). A rebate formed along the longitudinal edge of plate 6c defines a tongue 45 and a rebated longitudinal edge of plate 6d defines a tongue 46. A semi-circular groove 47 is formed in the tongue 45 and a semi-circular groove 48 is formed in the mutually adjacent surface of the tongue 46. When the plates 6c, 6d are assembled, the semi-circular grooves 47, 48 co-operate to define a circular passage through a locking pin 50 can be inserted. The lengths of the tongue 45, 46 along the logitudinal edges of the plates correspond to the length of a projection 19 along the plate 5b. The tongues 45, 46 extend from the longitudinal edge by an amount equal to the thickness of the plates. Rectangular-shaped apertures 49 are provided in the abutting plates 5c, 5d to accommodate the tongues 44, 45.

The two arrangements shown in Figures 6 and 7 alternate along the length of the compartments at regular pitches. Thus, the tongues extend, alternately, from the longitudinal edge of the plates first in one direction and then at right angles thereto. When the locking pin 50 is inserted through the passage formed by the semi-circular grooves, the plates 5c, 5d, 6c, 6d are firmly interlocked.

## Claims

1. A container (1) for the storage or transport of nuclear fuel elements comprising a plurality of elongate compartments (3) for receiving the nuclear fuel elements, the compartments (3) being defined by a first set of plates intersecting with a second set of plates, (5,6) the first set of plates (5) extending perpendicularly with respect to the second set of plates (6) to define compartments having a rectangular cross section, wherein, at an intersection of a first plate in the first set of plates and a second plate in the second set of plates, the first and second plates are interconnected by a joint comprising a locking pin (50) extending through a passage formed through and parallel to adjacent longitudinal edges of the plates.

2. A container according to claim 1, wherein the joint comprises at least one projection (9) and a recess (10) are provided in a longitudinal edge of the second plate, the recess on the first plate receiving a projection on the second plate and the recess on the second plate receiving a projection on the first plate, and wherein the locking pin (50) extends through a passage provided in the projections of the first and second plates.

3. A container according to claim 2, wherein the passage for the locking pin in the projections of the first and second plates each comprises a groove (11,15).

4. A container according to claim 3, wherein the projections may each comprise an end face extending along the longitudinal edge of the plate and a side face extending perpendicular thereto, wherein the groove extends parallel with the end face and has an access opening (13,17) extending along the length of the groove and provided in the side face.

5. A container according to claim 4, wherein the access opening (13) to the groove in the side face of the projections of the first plate is perpendicular with respect to the access opening (17) to the groove in the side face of the projections in the second plate.

6. A container according to claim 1, wherein at a position along an intersection of the first and second plates, two plates in the first set are each formed along their mutually adjacent longitudinal edges so as to define a tongue (40,41) on each of the two plates, the tongues co-operating so as to present mutually adjacent surfaces, a groove (42,43) being provided in each of the adjacent surfaces to define the passage for the locking pin (50), and wherein the tongues are accommodated in an aperture (44) formed in the plates of the second set.

7. A container according to claim 6, wherein at a further position along the intersection of the first and second set of plates, two plates in the second set are each formed along their mutually adjacent longitudinal edges so as to define a tongue (45,46) on each of the two plates, the tongues co-operating so as to present mutually adjacent surfaces, a groove (47,48) being provided on each of the adjacent surface to define a passage for the locking pin (50), and wherein the tongues are accommodated in an aperture (49) formed in the two plates of the first set.

## Patentansprüche

1. Behälter (1) für Lagerung oder Transport von Kernbrennelementen, mit einer Vielzahl länglicher Abteile (3) zur Aufnahme der Kernbrennelemente, wobei die Abteile (3) durch eine erste Gruppe von Platten festgelegt sind, die sich mit einer zweiten Gruppe von Platten (5, 6) kreuzen, wobei die erste Gruppe von Platten (5) senkrecht zur zweiten Gruppe von Platten (6) verläuft, um Abteile mit rechteckigem Querschnitt festzulegen, wobei die ersten und zweiten Platten an einer Kreuzungsstelle einer ersten Platte der ersten Gruppe von Platten und einer zweiten Platte der zweiten Gruppe von Platten durch ein Gelenk miteinander verbunden sind, das einen Verriegelungsstift (50) umfaßt, der durch einen Durchgang läuft, welcher durch benachbarte Längskanten der Platten gebildet ist und parallel zu diesen verläuft.

2. Behälter nach Anspruch 1, wobei das Gelenk mindestens einen Vorsprung (9) und eine Ausnehmung (10) umfaßt, die in einer Längskante an der zweiten Platte ausgebildet sind, wobei die Ausnehmung der ersten Platte einen Vorsprung an der zweiten Platte und die Ausnehmung der zweiten Platte einen Vorsprung an der ersten Platte aufnimmt und der Verriegelungsstift (50) durch einen in den Vorsprüngen der ersten und zweiten Platten vorgesehenen Durchgang läuft.

3. Behälter nach Anspruch 2, wobei der Durchgang für den Verriegelungsstift in den Vorsprüngen der ersten und zweiten Platten jeweils eine Nut (11, 15) umfaßt.

4. Behälter nach Anspruch 3, wobei die Vorsprünge jeweils eine Endfläche, die entlang der Längskante der Platte verläuft, und eine senkrecht dazu verlaufende Seitenfläche umfassen können, wobei die Nut parallel zur Endfläche verläuft und eine Zugangsöffnung (13, 17) aufweist, die sich über die Länge der Nut erstreckt und in der Seitenfläche vorgesehen ist.

5. Behälter nach Anspruch 4, wobei die Zugangsöffnung (13) zur Nut in der Seitenfläche der Vorsprünge der ersten Platte senkrecht zur Zugangsöffnung (17) zur Nut in der Seitenfläche der Vorsprünge der zweiten Platte verläuft.

6. Behälter nach Anspruch 1, wobei an einer Position entlang einer Kreuzungsstelle der ersten und zweiten Platten zwei Platten der ersten Gruppe jeweils entlang ihrer gegenseitig benachbarten Längskanten so ausgebildet sind, daß sie an jeder der beiden Platten eine Zunge (40, 41) ausbilden, wobei die Zungen so zusammenwirken, daß sie gegenseitig benachbarte Flächen bilden, und in jeder der benachbarten Flächen eine Nut (42, 43) ausgebildet ist, um den Durchgang für den Verriegelungsstift (50) festzulegen, und wobei die Zungen in einer Öffnung (44) aufgenommen sind, die in den Platten der zweiten Gruppe ausgebildet ist.

7. Behälter nach Anspruch 6, wobei an einer weiteren Position entlang der Kreuzungsstelle der ersten und zweiten Gruppe von Platten zwei Platten der zweiten Gruppe jeweils entlang ihrer gegenseitig benachbarten Längskanten so ausgebildet sind, daß sie an jeder der beiden Platten eine Zunge (45, 46) ausbilden, wobei die Zungen so zusammenwirken, daß sie gegenseitig benachbarte Flächen bilden, und in jeder der benachbarten Flächen eine Nut (47, 48) ausgebildet ist, um einen Durchgang für den Verriegelungsstift (50) festzulegen, und wobei die Zungen in einer Öffnung (49) aufgenommen sind, die in den beiden Platten der ersten Gruppe ausgebildet ist.

## Revendications

1. Conteneur (1) pour le stockage ou le transport d'éléments de combustible nucléaire, comprenant une pluralité de compartiments allongés (3) pour recevoir les éléments de combustible nucléaire, les compartiments (3) étant définis par un premier jeu de plaques en intersection avec un second jeu de plaques (5, 6), le premier jeu de plaques (5) s'étendant perpendiculairement par rapport au second jeu de plaques (6) pour définir des compartiments ayant une section droite rectangulaire, **caractérisé en ce que**, à une intersection d'une première plaque dans le premier jeu de plaques et une seconde plaque dans le second jeu de plaques, les première et seconde plaques sont interconnectées par un joint comprenant une cheville (50) de blocage s'étendant au travers d'un passage formé au travers des, et parallèle aux, bords longitudinaux adjacents des plaques.

2. Conteneur selon la revendication 1, **caractérisé en ce que** le joint comporte au moins un élément en saillie, et un évidement (10) est prévu dans un bord longitudinal de la seconde plaque, l'évidement sur la première plaque recevant un élément en saillie sur la seconde plaque et l'évidement sur la seconde plaque recevant un élément en saillie sur la première plaque, et **en ce que** la cheville de blocage (50) s'étend au travers d'un passage prévu dans les éléments en saillie des première et seconde plaques.

3. Conteneur selon la revendication 2, **caractérisé en ce que** le passage pour la cheville de blocage dans les éléments en saillie des première et seconde plaques, comporte chacun une gorge (11, 15).

4. Conteneur selon la revendication 3, **caractérisé en ce que** les éléments en saillie peuvent chacun comporter une face terminale s'étendant le long du bord longitudinal de la plaque et une face latérale s'étendant perpendiculairement à celle-ci et **en ce que** la gorge s'étend parallèlement à la face terminale et présente une ouverture d'accès (13, 17) s'étendant sur la longueur de la gorge, et prévue sur la face latérale.

5. Conteneur selon la revendication 4, **caractérisé en ce que** l'ouverture (13) d'accès à la gorge, sur la face latérale des éléments en saillie de la première plaque, est perpendiculaire à l'ouverture (17) d'accès à la gorge sur la face latérale des éléments en saillie de la seconde plaque.

6. Conteneur selon la revendication 1, **caractérisé en ce qu'**en une position le long d'une intersection des première et seconde plaques, deux plaques dans le premier jeu sont chacune formées le long de leurs bords longitudinaux adjacents mutuels, afin de définir une langue (40, 41) sur chacune des deux plaques, les langues coopérant afin de présenter des surfaces adjacentes mutuelles, une gorge (42, 43) étant prévue sur chacune des surfaces adjacentes pour définir le passage pour la cheville de blocage et **en ce que** les langues sont disposées dans une ouverture (44) formées dans les plaques du second jeu.

7. Conteneur selon la revendication 6, **caractérisé en ce qu'**en une autre position le long de l'intersection des premier et second jeux de plaques, deux plaques dans le second jeu sont chacune formées le long de leurs bords longitudinaux mutuels afin de définir une langue (45, 46) sur chacune des deux plaques, les langues coopérant afin de présenter des surfaces adjacentes mutuelles, une gorge (47, 48) étant prévue sur chacune des surfaces adjacentes pour définir un passage pour la cheville de blocage et **en ce que** les langues sont disposées dans une ouverture (49) formées dans les deux plaques du premier jeu.
